# EUROPÄISCHE PATENTSCHRIFT

(11) **EP 3 722 694 B1**
(45) Veröffentlichungstag und Bekanntmachung des Hinweises auf die Patenterteilung: **22.02.2023**
(21) Anmeldenummer: 20163298.1
(22) Anmeldetag: 16.03.2020
(51) Int. Cl.: F24H 1/00, B01D 53/86, B60H 1/22, F01N 3/20, F28D 7/10, F28D 21/00, F23J 15/02, F01N 3/08, F01N 3/02, F01N 13/08

(54) **WÄRMETAUSCHERBAUGRUPPE**
HEAT EXCHANGER COMPONENT
MODULE D'ÉCHANGEUR DE CHALEUR

(30) Priorität: 10.04.2019 DE 102019109382
(43) Veröffentlichungstag der Anmeldung: 14.10.2020
(73) Patentinhaber: Eberspächer Climate Control Systems GmbH, 73730 Esslingen (DE)
(72) Erfinder: Humburg, Michael, 73035 Göppingen (DE); Jensen, Hans, 73265 Dettingen (DE)
(74) Vertreter: Ruttensperger Lachnit Trossin Gomoll

(56) Entgegenhaltungen:
- DE-A1- 10 200 962
- DE-A1-102006 060 388
- DE-A1-102010 033 688
- DE-A1-102017 100 430
- DE-B3-102018 100 216

## Beschreibung

Die vorliegende Erfindung betrifft eine Wärmetauscherbaugruppe, welche beispielsweise in einem brennstoffbetriebenen Fahrzeugheizgerät dazu eingesetzt werden kann, die bei der Verbrennung freigesetzte Wärme auf ein Wärmeträgermedium, insbesondere ein flüssiges Wärmeträgermedium, zu übertragen.

Aufgrund strenger werdender Abgasnormen besteht auch bei brennstoffbetriebenen Fahrzeugheizgeräten das Erfordernis, bei der Verbrennung entstehendes Abgas zu reinigen, um den Schadstoffgehalt, insbesondere den Stickoxidgehalt, zu senken. Hierzu kann in einer an das Heizgerät anschließenden und das bei der Verbrennung entstehende Abgas aus dem Bereich des Heizgeräts abführenden Abgasanlage eine Abgasbehandlungseinheit vorgesehen sein.

Eine Wärmetauscherbaugruppe gemäß dem Oberbegriff des Anspruchs 1 ist aus der DE 102 00 962 A1 bekannt.

Es ist die Aufgabe der vorliegenden Erfindung, eine Wärmetauscherbaugruppe vorzusehen, welche bei baulich einfacher und kompakter Ausgestaltung die Minderung des Schadstoffgehalts in dem diese durchströmenden Abgas ermöglicht.

Erfindungsgemäß wird diese Aufgabe gelöst durch eine Wärmetauscherbaugruppe für ein brennstoffbetriebenes Fahrzeugheizgerät gemäß Anspruch 1. Diese umfasst:
- ein inneres Wärmetauschergehäuse mit einer eine Gehäuseachse umgebenden inneren Umfangswand und einer inneren Bodenwand, wobei das innere Wärmetauschergehäuse einen Abgasströmungsraum begrenzt,
- ein äußeres Wärmetauschergehäuse mit einer äußeren Umfangswand und einer äußeren Bodenwand, wobei das äußere Wärmetauschergehäuse und das innere Wärmetauschergehäuse einen Wärmeträgermediumströmungsraum begrenzen,
wobei am äußeren Wärmetauschergehäuse ein Abgasbehandlungsraum vorgesehen ist, und wobei in dem Abgasbehandlungsraum wenigstens eine von Abgas durchströmbare Abgasbehandlungseinheit angeordnet ist.

Um das aus dem Brennerbereich eines Heizgeräts ausgestoßene und die Wärmetauscherbaugruppe durchströmende Abgas in den Abgasbehandlungsraum leiten zu können, ist am inneren Wärmetauschergehäuse ein zu dem Abgasbehandlungsraum führender Abgaskanal vorgesehen.

Da der Abgaskanal in radialer Richtung über denjenigen radialen Bereich hinweg geführt werden muss, in welchem der Wärmeträgermediumströmungsraum liegt, ist weiter vorgesehen, dass das innere Wärmetauschergehäuse einen Gehäusekopfbereich aufweist, wobei die innere Umfangswand in ihrem von der inneren Bodenwand entfernten axialen Endbereich an den Gehäusekopfbereich anschließt, und dass der Abgaskanal an dem Gehäusekopfbereich vorgesehen ist.

Dabei wird eine hinsichtlich der Gasdichtigkeit und der einfachen und stabilen Ausgestaltung besonders vorteilhafte Ausgestaltung erreicht, da der Gehäusekopfbereich mit der inneren Umfangswand der inneren Bodenwand einstückig ausgebildet ist.

Bei dem erfindungsgemäßen Aufbau einer Wärmetauscherbaugruppe wird eine baulich Verknüpfung zwischen einem zur Wärmeübertragung auf ein Wärmeträgermedium vorgesehenen Systembereich und einem zur Abgasbehandlung vorgesehenen Systembereich bereitgestellt. Die Abgasbehandlung erfolgt somit in unmittelbarer Nähe bzw. unmittelbar anschließend an den wärmeübertragenden Systembereich, so dass die in diesem Bereich vorhandene Wärme für eine effizientere Abgasbehandlung genutzt werden kann.

Für eine bauliche Verknüpfung der Funktion Wärmeübertragung mit der Funktion Abgasbehandlung wird vorgeschlagen, dass der Abgasbehandlungsraum durch die äußere Umfangswand und eine an die äußere Umfangswand anschließende und diese in Umfangsrichtung um die Gehäuseachse bereichsweise umgebende Abgasbehandlungsraum-Umfangswand begrenzt ist, oder/und dass der Abgasbehandlungsraum in einem ersten axialen Endbereich durch eine vorzugsweise im axialen Bereich der äußeren Bodenwand angeordnete Abgasbehandlungsraum-Bodenwand begrenzt ist. Ferner kann dabei vorgesehen sein, dass in der Abgasbehandlungsraum-Bodenwand eine aus dem Abgasbehandlungsraum führende Abgasauslassöffnung vorgesehen ist.

Bei einer stabilen, einfach herzustellenden und insbesondere hinsichtlich der Gasdichtigkeit besonders vorteilhaften Ausgestaltung kann vorgesehen sein, dass das äußere Wärmetauschergehäuse mit der äußeren Umfangswand, der äußeren Bodenwand und der Abgasbehandlungsraum-Umfangswand oder/und der Abgasbehandlungsraum-Bodenwand einstückig ausgebildet ist.

Um das Anordnen wenigstens einer Abgasbehandlungseinheit im Abgasbehandlungsraum zu ermöglichen, diesen aber gleichwohl an beiden axialen Endbereichen abschließen zu können, wird vorgeschlagen, dass der Abgasbehandlungsraum in einem zweiten axialen Endbereich durch ein an dem äußeren Wärmetauschergehäuse angebrachtes Abgasbehandlungsraum-Abschlusselement abgeschlossen ist. Zum Einleiten von Abgas in den Abgasbehandlungsraum kann in dem Abgasbehandlungsraum-Abschlusselement eine in den Abgasbehandlungsraum führende Abgaseinlassöffnung vorgesehen sein.

Zum Bereitstellen des Abgaskanals im Gehäusekopfbereich kann am Gehäusekopfbereich ein bezüglich der Gehäuseachse nach radial außen sich erstreckender Abgaskanalansatz vorgesehen sein, wobei an dem Abgaskanalansatz an einer dem Abgasbehandlungsraum zugewandten axialen Seite ein vom Abgaskanalansatz axial vorstehender Abgasleitungsbereich vorgesehen ist, wobei der Abgaskanal den Abgaskanalansatz und den Abgasleitungsbereich durchsetzt und im Bereich des Abgasleitungsbereichs zu dem Abgasbehandlungsraum offen ist.

Eine Strömungsverbindung zwischen dem Abgaskanal und dem Abgasbehandlungsraum kann in einfacher Weise dadurch realisiert werden, dass der Abgasleitungsbereich in die Abgaseinlassöffnung eingeführt ist.

Zum Einleiten und Ausleiten von Wärmeträgermedium in den bzw. aus dem Wärmeträgermediumströmungsraum kann am Gehäusekopfbereich ein Wärmeträgermediumeinlass mit einem zu dem Wärmeträgermediumströmungsraum führenden Einlasskanal vorgesehen sein oder/und kann am Gehäusekopfbereich ein Wärmeträgermediumauslass mit einem von dem Wärmeträgermediumströmungsraum weg führenden Auslasskanal vorgesehen sein.

Wenigstens eine im Abgasbehandlungsraum angeordnete Abgasbehandlungseinheit kann eine Stickoxid-Speichereinheit, vorzugsweise Stickoxidkatalysator, umfassen.

Die Erfindung betrifft ferner ein brennstoffbetriebenes Heizgerät, umfassend eine mit Brennstoff und Verbrennungsluft gespeiste Brennkammerbaugruppe und eine erfindungsgemäß aufgebaute Wärmetauscherbaugruppe.

Die vorliegende Erfindung wird nachfolgend mit Bezug auf die beiliegenden Figuren detailliert beschrieben. Es zeigt:
- Fig. 1: eine Seitenansicht eines inneren Wärmetauschergehäuses;
- Fig. 2: eine Längsschnittansicht eines äußeren Wärmetauschergehäuses;
- Fig. 3: eine Querschnittansicht des äußeren Wärmetauschergehäuses der Fig. 2, geschnitten längs einer Linie III-III in Fig. 2;
- Fig. 4: eine Ansicht des äußeren Wärmetauschergehäuses in Blickrichtung IV in Fig. 2;
- Fig. 5: ein an dem äußeren Wärmetauschergehäuse zum Abschließen eines Abgasbehandlungsraums angeordnetes Abgasbehandlungsraum-Abschließelement;
- Fig. 6: eine das innere Wärmetauschergehäuse der Fig. 1 und das äußere Wärmetauschergehäuse der Fig. 2 umfassende Wärmetauscherbaugruppe.

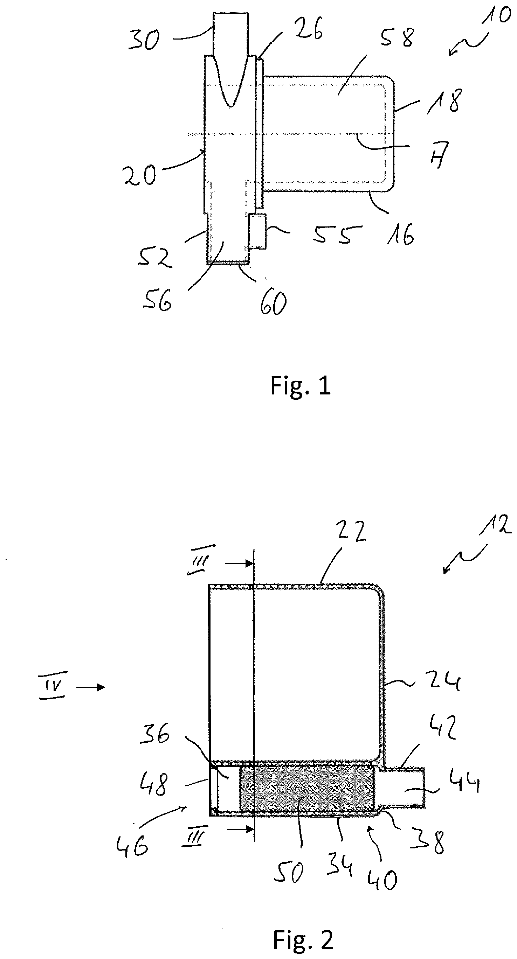

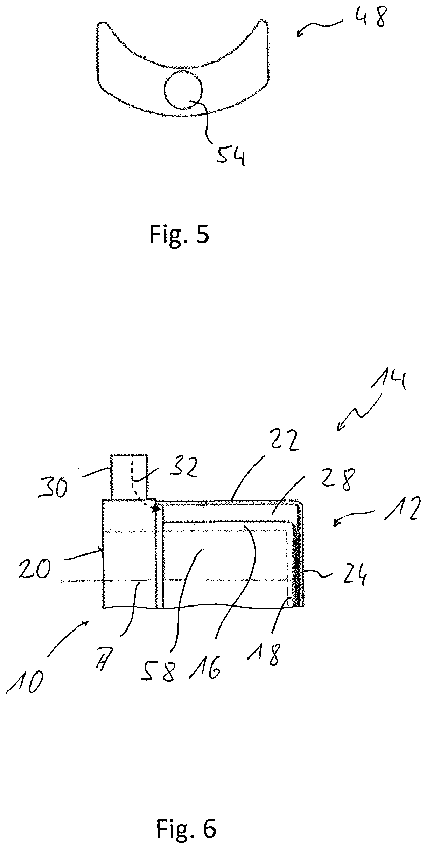

Die Fig. 1 und 2 zeigen ein inneres Wärmetauschergehäuse 10 bzw. ein äußeres Wärmetauschergehäuse 12, welche zum Aufbau einer Wärmetauscherbaugruppe 14 für ein brennstoffbetriebenes Fahrzeugheizgerät ineinander eingesetzt werden. Im Zusammenbau sind das innere Wärmetauschergehäuse 10 und das äußere Wärmetauschergehäuse 12 bzw. die damit aufgebaute Wärmetauscherbaugruppe 14 in Fig. 6 dargestellt.

Das innere Wärmetauschergehäuse 10 umfasst eine eine Gehäuseachse A umgebende innere Umfangswand 16 sowie eine daran anschließende bzw. damit einstückig ausgebildete innere Bodenwand 18. An dem von der inneren Bodenwand 18 entfernten axialen Endbereich schließt die innere Umfangswand 16 an einen allgemein mit 20 bezeichnetem Gehäusekopfbereich auf, welcher grundsätzlich eine ringartig die Gehäuseachse A umgebende Gestalt aufweist.

Das äußere Wärmetauschergehäuse 12 ist mit einer äußeren Umfangswand 22 und einer daran anschließenden bzw. damit einstückig ausgebildeten äußeren Bodenwand 24 aufgebaut. An dem Gehäusekopfbereich 20 des inneren Wärmetauschergehäuses 10 ist eine Montagestufe 26 ausgebildet, über welche im Zusammenbauzustand die äußere Umfangswand 22 des äußeren Wärmetauschergehäuses 12 geführt ist, so dass eine beispielsweise auch durch Verklebung unterstützte fluiddichte Verbindung zwischen dem inneren Wärmetauschergehäuse 12 und dem äußeren Wärmetauschergehäuse 24 gebildet ist. Zwischen dem inneren Wärmetauschergehäuse 10 und dem äußeren Wärmetauschergehäuse 12 ist ein Wärmeträgermediumströmungsraum 28 gebildet. Über einen am Gehäusekopfbereich 20 gebildeten Wärmeträgermediumeinlass 30 bzw. einen in Fig. 6 schematisch angedeuteten Einlasskanal 32 kann das Wärmeträgermedium, im Allgemeinen eine Flüssigkeit, wie z. B. das Kühlwasser im Kühlwasserkreislauf einer Brennkraftmaschine eines Fahrzeugs, in dem Wärmeträgermediumströmungsraum 28 eingeleitet werden. Ein in der Figur nicht dargestellter und ebenfalls am Gehäusekopfbereich 20 vorgesehener Wärmeträgermediumauslass führt das im Bereich der Wärmetauscherbaugruppe 14 erwärmte Wärmeträgermedium wieder aus dem Bereich des Wärmeträgermediumströmungsraums 28 ab.

Am äußeren Wärmetauschergehäuse 12 ist eine die äußere Umfangswand 22 in einem Bereich derselben radial außen umgebende bzw. an diese anschließende, insbesondere damit auch integral bzw. einstückig ausgebildete Abgasbehandlungsraum-Umfangswand 34 vorgesehen. Diese erstreckt sich vorzugsweise über den gesamten axialen Erstreckungsbereich der äußeren Umfangswand 22 und begrenzt zusammen mit dieser einen Abgasbehandlungsraum 36 im Wesentlichen in radialer Richtung und in Umfangsrichtung um die Gehäuseachse A.

Im Bereich der äußeren Bodenwand 24 ist in Zuordnung zu der Abgasbehandlungsraum-Umfangswand 34 eine Abgasbehandlungsraum-Bodenwand 38 vorgesehen, welche vorzugsweise im axialen Bereich der äußeren Bodenwand 24 positioniert ist bzw. diese nach radial außen verlängert und den Abgasbehandlungsraum 36 in einem ersten axialen Endbereich 44 begrenzt. In der Abgasbehandlungsraum-Bodenwand 38 ist beispielsweise im Bereich eines Auslassstutzens 42 eine aus dem Abgasbehandlungsraum 36 heraus führende Abgasauslassöffnung 44 vorgesehen.

In einem dem Gehäusekopfbereich 20 naheliegend positioniertem zweiten axialen Endbereich 46 ist der Abgasbehandlungsraum 36 durch ein beispielsweise plattenartig ausgebildetes Abgasbehandlungsraum-Abschlusselement 48 abgeschlossen. Dieses Abgasbehandlungsraum-Abschlusselement 48 ist an die gekrümmte Kontur des Abgasbehandlungsraums 36 angepasst und kann beispielsweise axial an die Abgasbehandlungsraum-Umfangswand 34 derart angesetzt werden, dass es mit der äußeren Umfangswand 32 axial bündig endet. Zum Erhalt eines gasdichten Abschlusses kann das Abgasbehandlungsraum-Abschlusselement durch Materialschluss, beispielsweise Verklebung, mit dem äußeren Wärmetauschergehäuse 12 im Bereich einer Stirnseite der Abgasbehandlungsraum-Umfangswand 34 bzw. einer Außenumfangsseite der Außenumfangswand 22 verbunden werden.

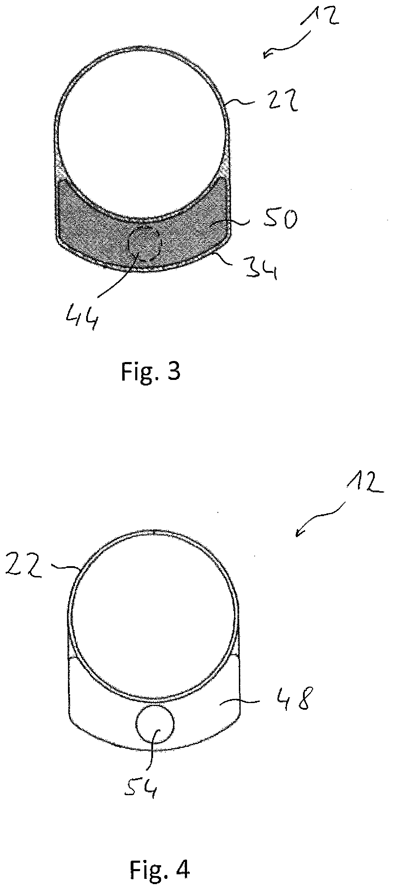

Im Abgasbehandlungsraum 36 ist zumindest eine allgemein mit 50 bezeichnete Abgasbehandlungseinheit angeordnet. Diese kann beispielsweise als Stickoxid-Speichereinheit, insbesondere Stickoxidkatalysator, ausgebildet sein. Ein derartiger Stickoxidkatalysator kann beispielsweise einen monolithischen oder als Metallgeflecht oder dergleichen aufgebauten und an seiner Oberfläche mit katalytisch wirksamem Material beschichteten Katalysatorkern umfassen. Auch dessen Querschnittskontur kann, wie die Fig. 3 dies zeigt, an die Querschnittskontur des Abgasbehandlungsraums 36 angepasst sein. Insbesondere kann die Abgasbehandlungseinheit 50 derart geformt und dimensioniert sein, dass sie im Abgasbehandlungsraum 36 zwischen der Abgasbehandlungsraum-Umfangswand 34 und der Außenumfangswand 22 radial unter Presspassung gehalten ist und beispielsweise an der Abgasbehandlungsraum-Bodenwand 38 axial abgestützt ist.

An dem Gehäusekopfbereich 20 ist in einem dem Abgasbehandlungsraum 34 entsprechenden Umfangsbereich nach radial außen vorspringend ein Abgaskanalansatz 52 vorgesehen. In einer einer Abgaseinlassöffnung 54 im Abgasbehandlungsraum-Abschlusselement 48 entsprechenden Umfangspositionierung und Radialpositionierung ist am Abgaskanalansatz 52 von diesem axial in Richtung auf das Abgasbehandlungsraum-Abschlusselement 48 zu hervorstehend ein Abgasleitungsbereich 54 beispielsweise in Form eines Abgasstutzens ausgebildet. In dem Abgaskanalansatz 52 bzw. in dem Abgasleitungsbereich 54 ist ein Abgaskanal 56 ausgebildet. Über den Abgaskanal 56 ist eine Abgasströmungsverbindung zwischen einem von bei der Verbrennung entstehendem Abgas durchströmbaren und im Inneren des inneren Wärmetauschergehäuses 10 gebildeten Abgasströmungsraum 58 und dem Abgasbehandlungsraum 34 bereitgestellt. Hierfür kann der Abgasleitungsbereich 55 in die Abgaseinlassöffnung 54 beispielsweise unter Presspassung eingeführt sein, so dass auch ein gasdichter Anschluss erreicht wird. Die Gasdichtigkeit kann durch den Einsatz eines zwischen dem Abgasleitungsbereich 55 und dem Abgasraum-Abschlusselement 48 wirkenden Dichtungselements oder durch Materialschluss unterstützt werden.

Um das innere Wärmetauschergehäuse 10 vorzugsweise aus Metallmaterial, wie z. B. aluminiumhaltigem Metallmaterial, aus einem Stück in einen Gussverfahren herstellen zu können, kann der Gehäusekopfbereich 20 im Bereich des Abgaskanalansatzes 52 bzw. des darin gebildeten Abschnitts des Abgaskanals 56 nach radial außen offen sein und durch ein daran dann festzulegendes Verschlusselement 60 gasdicht abgeschlossen werden. Auch das äußere Wärmetauschergehäuse 12 kann mit der äußeren Umfangswand 22, der äußeren Bodenwand 24, der Abgasbehandlungsraum-Umfangswand 34, der Abgasbehandlungsraum-Bodenwand 38 und dem Auslassstutzen 42 einstückig in einem Gussverfahren hergestellt werden, wobei hierzu aufgrund der geringeren thermischen Belastung alternativ zu dem Aufbau mit Metallmaterial auch Kunststoffmaterial eingesetzt werden kann.

Mit dem vorangehend beschriebenen Aufbau einer Wärmetauscherbaugruppe mit in diese integrierter Abgasbehandlungseinheit wird ein einfach zu realisierender, kompakter Aufbau mit einer geringen Anzahl an dafür erforderlichen Bauteilen realisiert. Da der Abgasbehandlungsraum und die in diesem angeordnete Abgasbehandlungseinheit unmittelbar anschließend an die Außenumfangswand des äußeren Wärmetauschergehäuses angeordnet ist und im Heizbetrieb diese äußere Umfangswand durch das dem Wärmeträgermediumströmungsraum durchströmende und darin erwärmte Wärmeträgermedium ebenfalls erwärmt wird, kann ein Teil dieser Wärme genutzt werden, um die für die Durchführung einer katalytischen Reaktion in der Abgasbehandlungseinheit erforderliche Temperatur schneller zu erreichen, wenn die Abgasbehandlungseinheit vom aus dem Abgaskanal mit einer Temperatur von mehr als 350°C austretendem Abgas durchströmt wird. Dabei ist von besonderer Bedeutung, dass die Abgasbehandlungseinheit unmittelbar anschließend an den Abgasaustritt aus dem Abgaskanal angeordnet ist, so dass auch hier wesentliche Wärmeverluste im Abgas vermieden werden. Somit kann die im Abgas transportierte Wärme ebenfalls effizient dazu genutzt werden, die Abgasbehandlungseinheit schnell auf die erforderliche Betriebstemperatur zu bringen bzw. bei dieser zu halten.

## Patentansprüche

1. Wärmetauscherbaugruppe für ein brennstoffbetriebenes Fahrzeugheizgerät umfassend:
- ein inneres Wärmetauschergehäuse (10) mit einer eine Gehäuseachse (A) umgebenden inneren Umfangswand (16) und einer inneren Bodenwand (18), wobei das innere Wärmetauschergehäuse (10) einen Abgasströmungsraum (58) begrenzt,
- ein äußeres Wärmetauschergehäuse (12) mit einer äußeren Umfangswand (22) und einer äußeren Bodenwand (24), wobei das äußere Wärmetauschergehäuse (12) und das innere Wärmetauschergehäuse (10) einen Wärmeträgermediumströmungsraum (28) begrenzen,
wobei am äußeren Wärmetauschergehäuse (12) ein Abgasbehandlungsraum (36) vorgesehen ist, und wobei in dem Abgasbehandlungsraum (36) wenigstens eine von Abgas durchströmbare Abgasbehandlungseinheit (50) angeordnet ist,
**dadurch gekennzeichnet, dass** das innere Wärmetauschergehäuse (10) einen mit der inneren Umfangswand (16) und der inneren Bodenwand (18) einstückig ausgebildeten Gehäusekopfbereich (20) aufweist, wobei die innere Umfangswand (16) in ihrem von der inneren Bodenwand (18) entfernten axialen Endbereich an den Gehäusekopfbereich (20) anschließt und an dem Gehäusekopfbereich (20) ein von dem Abgasströmungsraum (58) zu dem Abgasbehandlungsraum (36) führender Abgaskanal (56) vorgesehen ist.

2. Wärmetauscherbaugruppe nach Anspruch 1, dass der
Abgasbehandlungsraum (36) durch die äußere Umfangswand (22) und eine an die äußere Umfangswand (22) anschließende und diese in Umfangsrichtung um die Gehäuseachse (A) bereichsweise umgebende Abgasbehandlungsraum-Umfangswand (34) begrenzt ist, oder/und dass der Abgasbehandlungsraum (36) in einem ersten axialen Endbereich (40) durch eine vorzugsweise im axialen Bereich der äußeren Bodenwand (24) angeordnete Abgasbehandlungsraum-Bodenwand (38) begrenzt ist.

3. Wärmetauscherbaugruppe nach Anspruch 2, **dadurch gekennzeichnet, dass** in der Abgasbehandlungsraum-Bodenwand (38) eine aus dem Abgasbehandlungsraum (36) führende Abgasauslassöffnung (44) vorgesehen ist.

4. Wärmetauscherbaugruppe nach Anspruch 2 oder 3, **dadurch gekennzeichnet, dass** das äußere Wärmetauschergehäuse (12) mit der äußeren Umfangswand (22), der äußeren Bodenwand (24) und der Abgasbehandlungsraum-Umfangswand (34) oder/und der Abgasbehandlungsraum-Bodenwand (38) einstückig ausgebildet ist.

5. Wärmetauscherbaugruppe nach einem der Ansprüche 2-4, **dadurch gekennzeichnet, dass** der Abgasbehandlungsraum (36) in einem zweiten axialen Endbereich (46) durch ein an dem äußeren Wärmetauschergehäuse (12) angebrachtes Abgasbehandlungsraum-Abschlusselement (48) abgeschlossen ist.

6. Wärmetauscherbaugruppe nach Anspruch 5, **dadurch gekennzeichnet, dass** in dem Abgasbehandlungsraum-Abschlusselement (48) eine in den Abgasbehandlungsraum (36) führende Abgaseinlassöffnung (54) vorgesehen ist.

7. Wärmetauscherbaugruppe nach einem der vorangehenden Ansprüche, **dadurch gekennzeichnet, dass** am Gehäusekopfbereich (20) ein bezüglich der Gehäuseachse (A) nach radial außen sich erstreckender Abgaskanalansatz (52) vorgesehen ist, wobei an dem Abgaskanalansatz (52) an einer dem Abgasbehandlungsraum (36) zugewandten axialen Seite ein vom Abgaskanalansatz (52) axial vorstehender Abgasleitungsbereich (55) vorgesehen ist, wobei der Abgaskanal (56) den Abgaskanalansatz (52) und den Abgasleitungsbereich (55) durchsetzt und im Bereich des Abgasleitungsbereichs (55) zu dem Abgasbehandlungsraum (36) offen ist.

8. Wärmetauscherbaugruppe nach Anspruch 6 und Anspruch 7, **dadurch gekennzeichnet, dass** der Abgasleitungsbereich (55) in die Abgaseinlassöffnung (54) eingeführt ist.

9. Wärmetauscherbaugruppe nach einem der vorangehenden Ansprüche, **dadurch gekennzeichnet, dass** am Gehäusekopfbereich (20) ein Wärmeträgermediumeinlass (30) mit einem zu dem Wärmeträgermediumströmungsraum (28) führenden Einlasskanal (32) vorgesehen ist, oder/und dass am Gehäusekopfbereich (20) ein Wärmeträgermediumauslass mit einem von dem Wärmeträgermediumströmungsraum (28) weg führenden Auslasskanal vorgesehen ist.

10. Wärmetauscherbaugruppe nach einem der vorangehenden Ansprüche, **dadurch gekennzeichnet, dass** wenigstens eine im Abgasbehandlungsraum (36) angeordnete Abgasbehandlungseinheit (50) eine Stickoxid-Speichereinheit, vorzugsweise Stickoxidkatalysator, umfasst.

11. Brennstoffbetriebenes Heizgerät, umfassend eine mit Brennstoff und Verbrennungsluft gespeiste Brennkammerbaugruppe und eine Wärmetauscherbaugruppe (14) einem der vorangehenden Ansprüche.

## Claims

1. Heat exchanger assembly for a fuel-operated vehicle heater comprising:
- an inner heat exchanger housing (10) with an inner circumferential wall (16) surrounding a housing axis (A) and an inner bottom wall (18), wherein the inner heat exchanger housing (10) defines an exhaust gas flow space (58),
- an outer heat exchanger housing (12) with an outer circumferential wall (22) and an outer bottom wall (24), wherein said outer heat exchanger housing (12) and said inner heat exchanger housing (10) define a heat transfer medium flow space (28),
wherein an exhaust gas treatment space (36) is provided on the outer heat exchanger housing (12), and wherein at least one exhaust gas treatment unit (50) through which exhaust gas can flow is arranged in the exhaust gas treatment space (36),
**characterized in that** the inner heat exchanger housing (10) comprises a housing head region (20) formed in one piece with the inner circumferential wall (16) and the inner bottom wall (18), wherein the inner circumferential wall (16) adjoins the housing head region (20) in its axial end region remote from the inner bottom wall (18) and an exhaust gas duct (56) leading from the exhaust gas flow space (58) to the exhaust gas treatment space (36) is provided on the housing head region (20).

2. Heat exchanger assembly according to claim 1, **characterized in that** the exhaust gas treatment space (36) is defined by the outer circumferential wall (22) and an exhaust gas treatment space circumferential wall (34) adjoining the outer circumferential wall (22) and surrounding the latter in the circumferential direction about the housing axis (A) in some regions, and/or **in that** the exhaust gas treatment space (36) is defined in a first axial end region (40) by an exhaust gas treatment space bottom wall (38) preferably arranged in the axial region of the outer bottom wall (24).

3. Heat exchanger assembly according to claim 2, **characterized in that** an exhaust gas outlet opening (44) leading out of the exhaust gas treatment space (36) is provided in the exhaust gas treatment space bottom wall (38).

4. Heat exchanger assembly according to claim 2 or 3, **characterized in that** the outer heat exchanger housing (12) is formed in one piece with the outer circumferential wall (22), the outer bottom wall (24) and the exhaust gas treatment space circumferential wall (34) or/and the exhaust gas treatment space bottom wall (38).

5. Heat exchanger assembly according to one of claims 2 to 4, **characterized in that** the exhaust gas treatment space (36) is closed in a second axial end region (46) by an exhaust gas treatment space closure element (48) mounted to the outer heat exchanger housing (12).

6. Heat exchanger assembly according to claim 5, **characterized in that** an exhaust gas inlet opening (54) leading into the exhaust gas treatment space (36) is provided in the exhaust gas treatment space closure element (48).

7. Heat exchanger assembly according to one of the preceding claims, **characterized in that** an exhaust gas duct extension (52) extending radially outwards with respect to the housing axis (A) is provided on the housing head region (20), wherein an exhaust gas line region (55) projecting axially from the exhaust duct extension (52) is provided on the exhaust gas duct extension (52) on an axial side facing the exhaust gas treatment space (36), wherein the exhaust gas duct (56) passes through the exhaust gas duct extension (52) and the exhaust gas line region (55) and is open in the region of the exhaust gas line region (55) to the exhaust gas treatment space (36).

8. Heat exchanger assembly according to claim 6 and claim 7, **characterized in that** the exhaust gas line region (55) is inserted into the exhaust gas inlet opening (54).

9. Heat exchanger assembly according to one of the preceding claims, **characterized in that** a heat transfer medium inlet (30) with an inlet duct (32) leading to the heat transfer medium flow space (28) is provided at the housing head region (20), or/and that a heat transfer medium outlet with an outlet duct leading away from the heat transfer medium flow space (28) is provided at the housing head region (20).

10. Heat exchanger assembly according to one of the preceding claims, **characterized in that** at least one exhaust gas treatment unit (50) arranged in the exhaust gas treatment space (36) comprises a nitrogen oxide storage unit, preferably a nitrogen oxide catalyst.

11. Fuel-operated heater comprising a combustion chamber assembly supplied with fuel and combustion air and a heat exchanger assembly (14) according to one of the preceding claims.

## Revendications

1. Ensemble d'échangeur de chaleur pour un appareil de chauffage de véhicule opéré au carburant, comprenant :
- un boîtier d'échangeur de chaleur intérieur (10) avec une paroi circonférentielle intérieure (16) entourant un axe de boîtier (A) et une paroi de fond intérieure (18), dans lequel le boîtier d'échangeur de chaleur intérieur (10) définit un espace d'écoulement des gaz d'échappement (58),
- un boîtier d'échangeur de chaleur extérieur (12) avec une paroi circonférentielle extérieure (22) et une paroi de fond extérieure (24), dans lequel le boîtier d'échangeur de chaleur extérieur (12) et le boîtier d'échangeur de chaleur intérieur (10) définissent un espace d'écoulement de médium caloporteur (28),
dans lequel un espace de traitement des gaz d'échappement (36) est prévue sur le boîtier d'échangeur de chaleur extérieur (12), et dans lequel au moins une unité de traitement des gaz d'échappement (50) pouvant être traversée par les gaz d'échappement est disposée dans l'espace de traitement des gaz d'échappement (36),
**caractérisé en ce que** le boîtier d'échangeur de chaleur intérieur (10) présente une zone de tête de boîtier (20) réalisée d'une seule pièce avec la paroi circonférentielle intérieure (16) et la paroi de fond intérieure (18), dans lequel la paroi circonférentielle intérieure (16) se raccorde à la zone de tête de boîtier (20) dans sa zone d'extrémité axiale éloignée de la paroi de fond intérieure (18) et un canal des gaz d'échappement (56) menant de l'espace d'écoulement des gaz d'échappement (58) à l'espace de traitement des gaz d'échappement (36) est prévu sur la zone de tête de boîtier (20).

2. Ensemble d'échangeur de chaleur selon la revendication 1, **caractérisé en ce que** l'espace de traitement des gaz d'échappement (36) est défini par la paroi circonférentielle extérieure (22) et par une paroi circonférentielle de l'espace de traitement des gaz d'échappement (34) qui se raccorde à la paroi circonférentielle extérieure (22) et qui l'entoure par zones dans la direction circonférentielle autour de l'axe du boîtier (A), ou/et **en ce que** l'espace de traitement des gaz d'échappement (36) est défini dans une première zone d'extrémité axiale (40) par une paroi de fond de l'espace de traitement des gaz d'échappement (38), disposée de préférence dans la zone axiale de la paroi de fond extérieure (24).

3. Ensemble d'échangeur de chaleur selon la revendication 2, **caractérisé en ce qu'**une ouverture de sortie des gaz d'échappement (44) menant hors de l'espace de traitement des gaz d'échappement (36) est prévue dans la paroi de fond de l'espace de traitement des gaz d'échappement (38).

4. Ensemble d'échangeur de chaleur selon la revendication 2 ou 3, **caractérisé en ce que** le boîtier d'échangeur de chaleur extérieur (12) est formé d'une seule pièce avec la paroi circonférentielle extérieure (22), la paroi de fond extérieure (24) et la paroi circonférentielle de l'espace de traitement des gaz d'échappement (34) ou/et la paroi de fond de l'espace de traitement des gaz d'échappement (38).

5. Ensemble d'échangeur de chaleur selon l'une des revendications 2 à 4, **caractérisé en ce que** l'espace de traitement des gaz d'échappement (36) est fermé dans une deuxième zone d'extrémité axiale (46) par un élément de terminaison de l'espace de traitement des gaz d'échappement (48) monté sur le boîtier d'échangeur de chaleur extérieur (12).

6. Ensemble d'échangeur de chaleur selon la revendication 5, **caractérisé en ce qu'**une ouverture d'entrée des gaz d'échappement (54) menant dans l'espace de traitement des gaz d'échappement (36) est prévue dans l'élément de terminaison de l'espace de traitement des gaz d'échappement (48).

7. Ensemble d'échangeur de chaleur selon l'une des revendications précédentes, **caractérisé en ce qu'**il est prévu sur la zone de tête de boîtier (20) un embout de canal des gaz d'échappement (52) s'étendant radialement vers l'extérieur par rapport à l'axe de boîtier (A), dans lequel une zone de conduite des gaz d'échappement (55) dépassant axialement de l'embout de canal des gaz d'échappement (52) est prévue sur l'embout de canal des gaz d'échappement (52) sur un côté axial tourné vers l'espace de traitement des gaz d'échappement (36), dans lequel le canal des gaz d'échappement (56) traverse l'embout de canal des gaz d'échappement (52) et la zone de conduite des gaz d'échappement (55) et est ouvert vers l'espace de traitement des gaz d'échappement (36) au niveau de la zone de conduite des gaz d'échappement (55).

8. Ensemble échangeur de chaleur selon la revendication 6 et la revendication 7, **caractérisé en ce que** la zone de conduite des gaz d'échappement (55) est introduite dans l'ouverture d'entrée des gaz d'échappement (54).

9. Ensemble d'échangeur de chaleur selon l'une des revendications précédentes, **caractérisé en ce qu'**il est prévu sur la zone de tête de boîtier (20) une entrée de médium caloporteur (30) avec un canal d'entrée (32) menant à l'espace d'écoulement de médium caloporteur (28), ou/et **en ce qu'**il est prévu sur la zone de tête de boîtier (20) une sortie de médium caloporteur avec un canal de sortie s'éloignant de l'espace d'écoulement de médium caloporteur (28).

10. Ensemble d'échangeur de chaleur selon l'une des revendications précédentes, **caractérisé en ce qu'**au moins une unité de traitement des gaz d'échappement (50) disposée dans l'espace de traitement des gaz d'échappement (36) comprend une unité de stockage des oxydes d'azote, de préférence un catalyseur d'oxydes d'azote.

11. Appareil de chauffage opéré au carburant comprenant un ensemble de chambre de combustion alimenté en combustible et en air de combustion et un ensemble d'échangeur de chaleur (14) selon l'une des revendications précédentes.
